# EUROPEAN PATENT SPECIFICATION

(11) **EP 3 518 359 B1**
(45) Date of publication and mention of the grant of the patent: **26.01.2022**
(21) Application number: 17852610.9
(22) Date of filing: 09.05.2017
(51) Int. Cl.: H02B 11/133, H02B 11/127, H02B 11/24, H02B 11/167

(54) **SWITCHGEAR**
SCHALTANLAGE
APPAREILLAGE DE COMMUTATION

(30) Priority: 26.09.2016 JP 2016186712
(43) Date of publication of application: 31.07.2019
(73) Proprietor: Hitachi Industrial Equipment Systems Co., Ltd., Chiyoda-ku Tokyo 101-0022 (JP)
(72) Inventor: SAWADA Masashi, Tokyo 101-0022 (JP); WATANABE Naoya, Tokyo 101-0022 (JP); HONMA Masahiro, Tokyo 101-0022 (JP); HORII Chihiro, Tokyo 101-0022 (JP)
(74) Representative: MERH-IP Matias Erny Reichl Hoffmann Patentanwälte PartG mbB
(86) International application number: PCT/JP2017/017570
(87) International publication number: WO 2018/055829

(56) References cited:
- EP-A1- 3 016 223
- WO-A1-2013/076048
- CN-U- 204 793 800
- JP-A- 2009 011 070
- JP-B2- 4 237 335
- JP-U- S5 789 311
- JP-U- S57 175 513
- JP-U- S63 127 207
- US-B1- 6 445 570

## Description

### Technical Field

The present invention relates to a switchgear or more particularly, to a switchgear suited to one where a switching device is provided with a drawing-operation interlock device.

### Background Art

A drawer type switching device accommodated in a switching device compartment of a switchgear generally has an operation position and a test position in the switching device compartment. When the switching device is located at the operation position, a main circuit disconnecting portion is automatically connected so that an operational status is established by activating the switching device in this state. When located at the test position, the switching device is tested for power-on and power-off.

If the switching device is activated at the test position and the activated switching device is moved to the operation position, the current flows through the switching device at the moment when the main circuit disconnecting portion is connected thereto. Particularly in a case where a short-circuit current flows due to an accident or the like, an electromagnetic force at the main circuit disconnecting portion, for example, acts in a direction to draw out the switching device. Hence, an operator is put at great risk, as subjected to an abnormally great force or exposed to arcs.

In this connection, the drawer type switching device is invariably equipped with the drawing-operation interlock device. Specifically, this interlock device is adapted to inhibit the switching device from being drawn out when the switching device is activated at the test position or the operation position, and to inhibit the switching device from being mechanically or electrically activated when the switching device is midway between the operation position and the test position.

Patent Documents 1 to 10 are exemplified as prior art documents related to such an interlock device for the switchgear.

Patent Document 1 discloses the following structure. When a drawer type breaker is drawn out from or inserted in a breaker compartment, a swing link coupled to an end of a shutter driving lever for opening and closing a shutter provided at the main circuit disconnecting portion is driven with a roller of the drawer type breaker.

Patent Document 2 discloses the following structure. A locking device for inhibiting the movement of the lever is mounted to the switching device such that the switching device cannot be moved if a front door is an open state when the switching device loaded in a drawer type enclosed switchboard is to be drawn out.

Further, Patent Document 3 discloses the following structure. An interlock lever operatively connected to an opening/closing shaft lever is assembled to a transfer carriage for a drawer type switching device such that an operation of drawing out the switching device is disabled when the switching device is activated.

Patent Document 4 shows an interlock device that prevents connection of an electrical device within a cabinet unless the cabinet door is closed. The interlock includes a spring-biased brake bar controlling the position of a brake. The brake bar is biased so that it pulls the brake against one of the wheels of a circuit breaker.

Patent Document 5 shows a door interlock device for a vacuum circuit breaker which is operated in cooperation with an operation of a cradle shutter. The interlock device includes a pressing unit that is provided on one end portion a shutter lever driving a terminal shutter of a cradle and a driving force transfer unit.

Patent Document 6 shows an interlocking device for a door of a switchgear having a draw-out circuit breaker comprising a locking unit, a driving unit arranged for acting on the locking unit upon a movement of the draw-out circuit breaker.

Patent Document 7 shows a door operation and interlocking device to close a cubical switchboard. The interlocking device includes a linking board, a latch hook board, a mounting panel, an extension spring, a hexagon head tapping screw, an interlocking, an apron, a separation blade and an unblock bent plate.

Patent Document 8 shows an interlock mechanism in a simple structure for preventing a door from opening except when a main breaker is put in a disconnection state in a draw out type circuit breaker and making it possible to move the main breaker freely except when the door is open.

Patent Document 9 shows a switchboard with shutters used in a path between an electric device and an electric wire in a bus barrel and a load side main circuit in a device housing cylinder.

Patent Document 10 shows a switchboard using a shutter mechanism to prevent unwanted contacting of the circuit breakers.

### Citation List

### Patent Document

Patent Document 1: Japanese Patent Application Laid-Open No. 2001-16717
Patent Document 2: Japanese Patent Application Laid-Open No. Hei 2-119507
Patent Document 3: Japanese Patent Application Laid-Open No. Sho 60-204204
Patent Document 4: US 6 445 570 B1
Patent Document 5: EP 3 016 223 A1
Patent Document 6: WO 2013/076048 A1
Patent Document 7: CN 204 793 800 U
Patent Document 8: JP 4237335 B2
Patent Document 9: JP S57 175513 U
Patent Document 10: JP S57 89311 U

### Summary of the Invention

### Technical Problem

The foregoing Patent Documents 1 to 3 suggest that the main circuit disconnecting portion is opened or closed by means of a shutter, that the switching device is provided with the locking device for inhibiting the movement of the lever such that the switching device cannot be moved when the door is in the open state, and that the drawing operation is inhibited when the drawer type switching device is activated. However, these Patent Documents do not suggest measures to inhibit the movement of the switching device when the switching device is at the disconnection position with the door in the open state, and to inhibit the operation of opening/closing the door while the switching device with the door in the closed state is moved from the disconnection position to the operation position. These Patent Documents do not contemplate a measure to deal with a case where a worker mistakenly operates the switchgear (the worker not trained to operate the switchgear mistakenly opens the door). It is difficult to say that these Patent Documents pay attention to the safety of the workers.

The above problem is solved by the subject matter of the appended claims. In particular, an object thereof is to provide a switchgear which is adapted to achieve enhanced safety of the worker by inhibiting the movement of the switching device when the switching device is located at a disconnection position with the door in the open state, and by inhibiting the operation of opening/closing the door while the switching device with the door in closed state is moved from the disconnection position to the operation position.

### Solution to Problem

A switchgear according to claim 1.

### Advantageous Effects of the Invention

According to the present invention, it can be provided the switchgear which is adapted to achieve enhanced safety of the worker by inhibiting the movement of a switching device when the switching device is located at the disconnection position with the door in open state, and by inhibiting the operation of opening the closed door while the switching device with the door in closed state is moved from the disconnection position to the operation position.

### Brief Description of Drawings

Figure 1 is a perspective view showing an overall structure of a switchgear according to Embodiment 1 to which the present invention is applied.
Figure 2 is a perspective view of the switchgear according to Embodiment 1 to which the present invention is applied, showing an internal structure thereof with a part of the overall structure broken away.
Figure 3 is schematic perspective view of a breaker compartment of the switchgear according to Embodiment 1 to which the present invention is applied, showing a state where a door of the switchgear of Embodiment 1 is opened and a breaker is not inserted in the breaker compartment.
Figure 4 is a diagram showing a relation between a stopper fitting, a stopper operation fitting and a stopper operation lever, and an engagement lever in the state shown in Figure 3.
Figure 5 is a side view showing a state where the breaker is accommodated in the breaker compartment located at a test position in the switchgear according to Embodiment 1 to which the present invention is applied.
Figure 6 is a side view showing a state where the breaker is inserted in the breaker compartment located at a disconnection position in the switchgear according to Embodiment 1 to which the present invention is applied when the door of the switchgear is opened.
Figure 7 is a side view showing a state where the breaker is inserted in the breaker compartment located at the disconnection position in the switchgear according to Embodiment 1 to which the present invention is applied when the door of the switchgear is closed.
Figure 8 is a fragmentary perspective view of Figure 7, showing a state where a handlebar insertion port is closed with a handlebar insertion port cover.
Figure 9 is a fragmentary perspective view of Figure 7, showing a state where the handlebar is inserted in the handlebar insertion port after the handlebar insertion port is removed of the closure with the handlebar insertion port cover.
Figure 10 is a side view showing a state where the breaker is inserted in the breaker compartment with the shutters in open position when the door of the switchgear according to Embodiment 1 to which the present invention is applied is closed.
Figure 11 is a side view showing a state where the breaker is inserted in the breaker compartment located at a breaker operation position in the switchgear according to Embodiment 1 to which the present invention is applied when the door of the switchgear is closed.
Figure 12 is a fragmentary perspective view of Figure 11, showing a state where a groove of the engagement lever is engaged with an engagement pin of the door.
Figure 13 is a fragmentary perspective view of Figure 11, showing a state where the groove of an engagement lever is disengaged from the engagement pin of the door.
Figure 14 is a diagram showing a breaker employed by the switchgear to which the present invention is applied.
Figure 15 is a sectional view taken on the line in a depth direction of the switchgear, showing a modification of the switchgear to which the present invention is applied.

### Description of Embodiments

A switchgear of the present invention will hereinbelow be described with reference to the illustrated embodiment. Throughout the figures, equal or similar reference numerals are principally assigned to equal or similar components.

### <Embodiment 1>

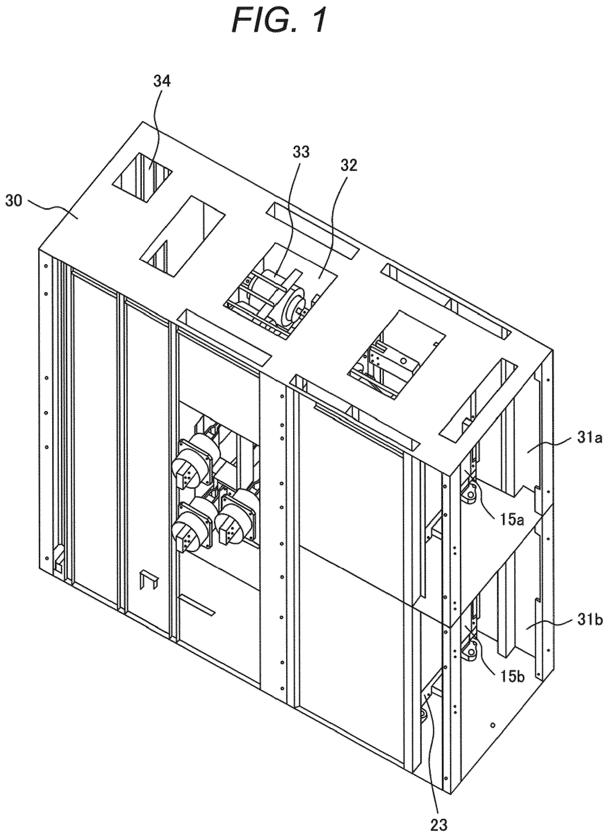

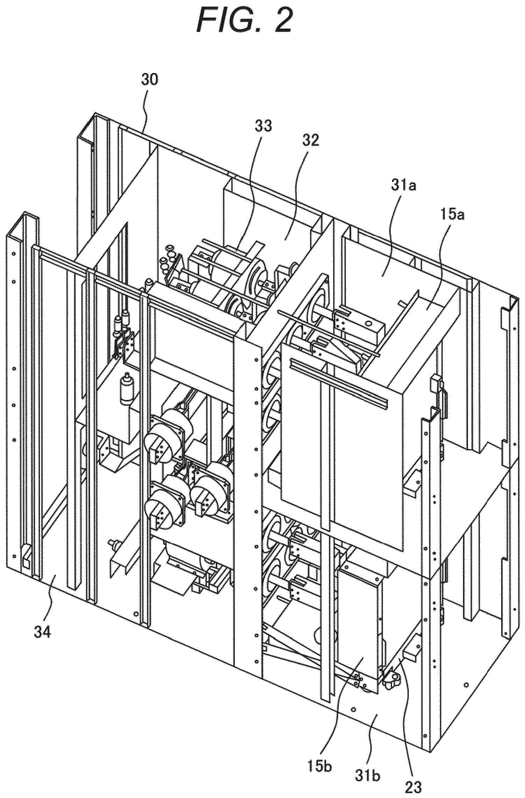

Figure 1 and Figure 2 schematically show the overall structure of a switchgear according to an embodiment of the present invention.

The present embodiment is described with reference to a breaker as an example of a switching device.

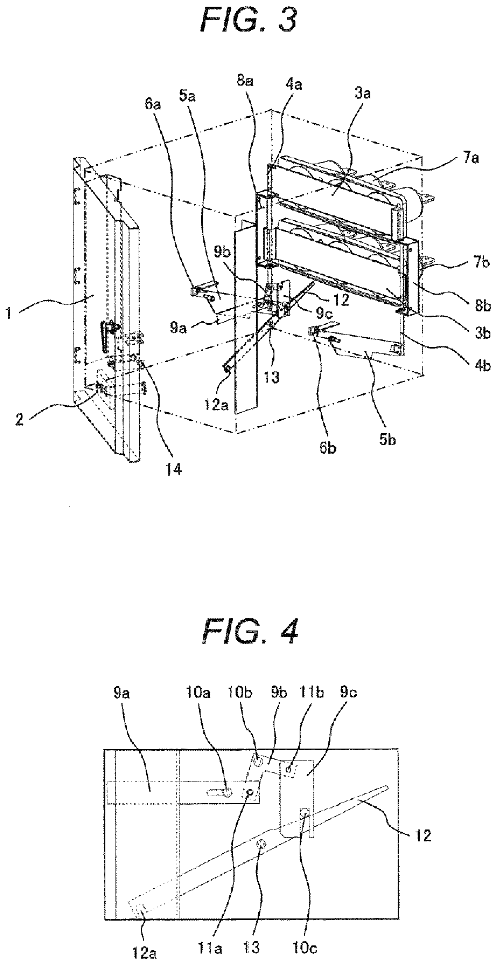

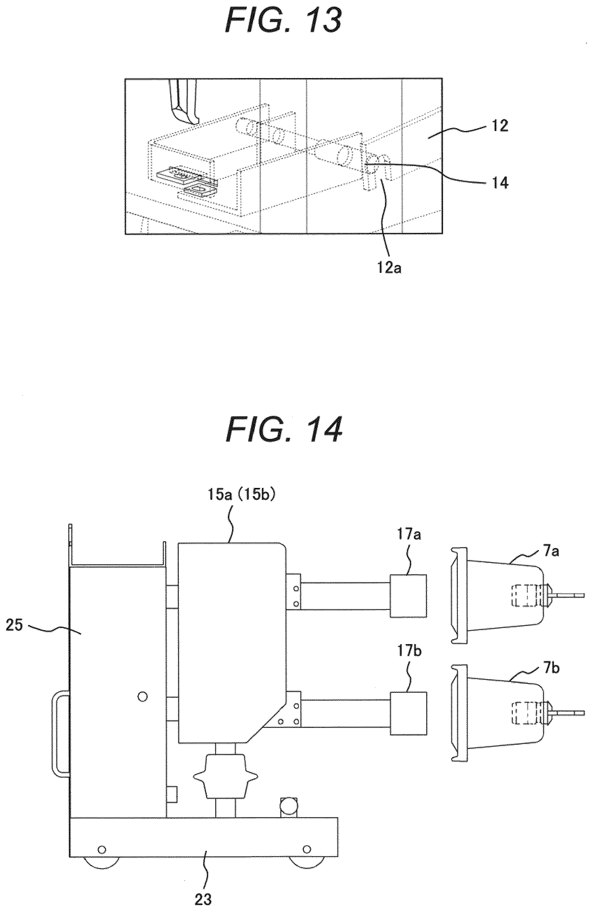

As shown in Figure 1 and Figure 2, the switchgear of the embodiment includes: a housing 30; breakers 15a and 15b which are respectively accommodated in an upper breaker compartment 31a and a lower breaker compartment 31b disposed in the housing 30, and which are each responsible for conduction and shut off of electric current and carried on a carriage 23; a bas-bar 33 which is accommodated in a bus-bar compartment 32 disposed on a rear side from the upper breaker compartment 31a and the lower breaker compartment 31b and which is connected to disconnection terminals 17a and 17b of the breakers 15a and 15b (see Figure 14) via disconnection bushings 7a and 7b (see Figure 14); and a front door 1 (see Figure 3) which is opened and closed when the breaker 15a or 15b is loaded in or unloaded from the upper breaker compartment 31a or the lower breaker compartment 31b.

Each of the above-described breakers 15a and 15b essentially include a vacuum circuit breaker and the like, and is operatively opened and closed by means of a solenoid operation device 25. The disconnection terminals 17a and 17b of the breakers are connected to the bus bar 33 in the bus-bar compartment 32 via the disconnection bushings 7a and 7b (Figure 14 shows a state where the disconnection terminals 17a and 17b are not connected to the disconnection bushings 7a and 7b.).

The above-described upper breaker compartment 31a, the lower breaker compartment 31b, the cable compartment 34 and the bus-bar compartment 32 are each isolated by partition walls.

In the switchgear of the present embodiment, as shown in Figure 3, the upper breaker compartment 31a (Since the lower breaker compartment 31b has the same structure as the upper breaker compartment 31a, the following description is made on the upper breaker compartment 31a as a representative example) is provided with shutters 3a and 3b for covering live parts of the disconnection bushings 7a and 7b.

The shutters 3a and 3b include: shutter operation rod guides 8a and 8b; a shutter operation rods 4a, 4b moving in the shutter operation rod guides 8a and 8b; and shutter operation levers 5a and 5b for operating the shutter operation rods 4a and 4b. In a state where the breaker 15a is not inserted in the upper breaker compartment 31a, the shutter 3a and 3b move down due to their own weight, thus covering the live parts of the disconnection bushings 7a and 7b.

The shutter operation levers 5a and 5b have padlocks 6a and 6b affixed thereto for preventing an erroneous opening or closing operation of the shutters 3a and 3b.

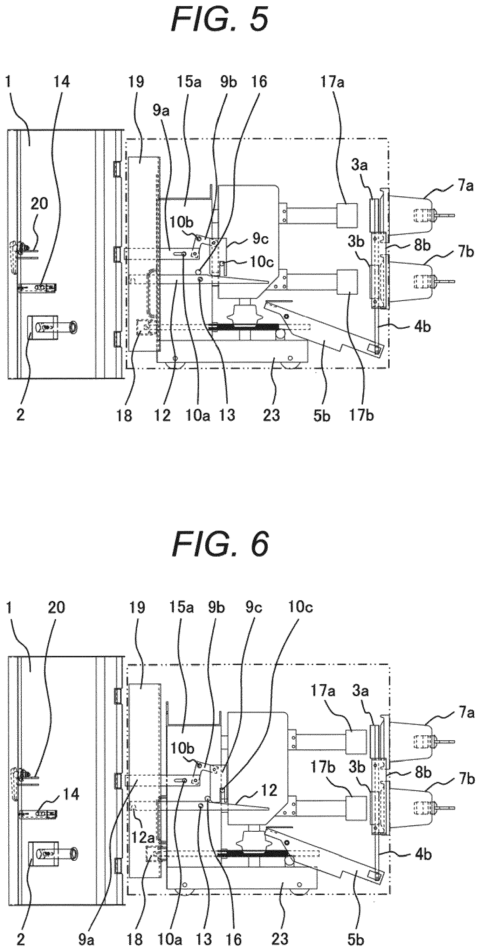

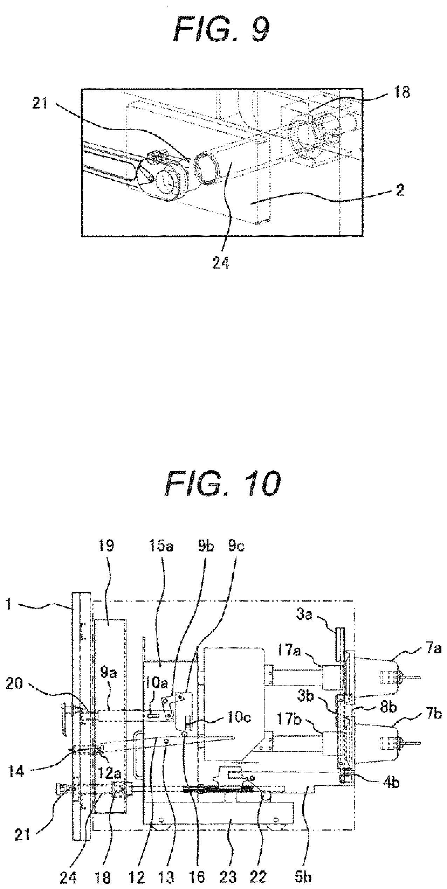

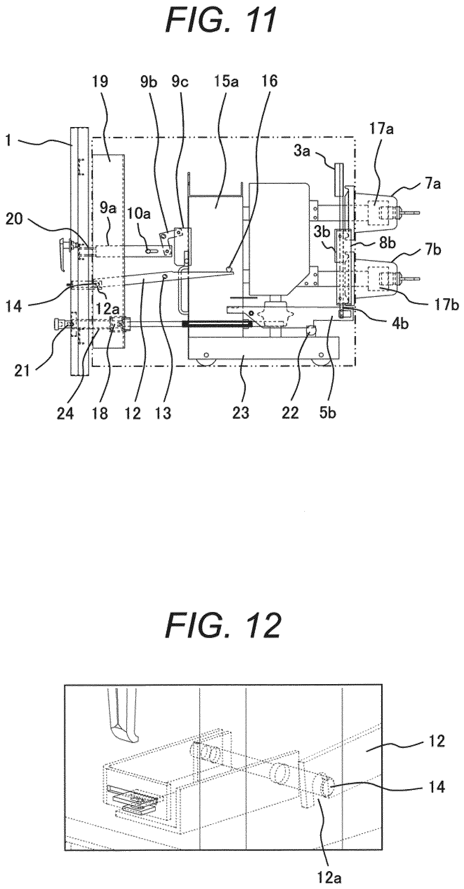

According to the switchgear of the present embodiment, as shown in Figure 5 to Figure 7, Figure 10 and Figure 11, an engagement lever 12 is rotatably secured to an inside wall in the upper breaker compartment 31a by means of a fixing pin 13. An engagement pin 14 to engage with this engagement lever 12 is disposed on an inner side of the front door 1.

A stopper fitting 9c and a stopper operation fitting 9a are disposed on the inside wall of the upper breaker compartment 31a. A crank-shaped stopper operation lever 9b has one end thereof rotatably connected to the stopper fitting 9c by means of a movable linking pin 11b and has the other end thereof rotatably connected to the stopper operation fitting 9a by means of a movable linking pin 11a. The breaker 15a is provided with a stopper pin 16. A door fixing bracket 20 projects from an inner side of the front door 1.

The switchgear of the present embodiment further includes: a handlebar 21 used for loading or unloading the upper breaker compartment 31a; a cylindrical member 24 formed in the front door 1 and allowing the handlebar 21 to be inserted therein; a breaker loading/unloading mechanism 18 which is engaged with the handlebar 21 inserted in this cylindrical member 24; and a handlebar insertion port cover 2 which closes an insertion port of the cylindrical member 24 when the handlebar 21 is not inserted in the cylindrical member. The switchgear further includes a frame fixing board 19 which is in contact with the breaker loading/unloading mechanism 18 for fixing the breaker 15a in position.

Next, operations of the switchgear of the present embodiment are described with reference to Figure 3 to Figure 13.

In a state where the breaker 15a is not inserted in the upper breaker compartment 31a, as shown in Figure 3, the shutters 3a and 3b are lowered by their own weight, covering the live parts of the disconnection bushings 7a and 7b. At this time, a relation between the stopper operation fitting 9a, the stopper operation lever 9b and the stopper fitting 9c, and the engagement lever 12 is as shown in Figure 4. Specifically, the stopper operation fitting 9a, the stopper operation lever 9b, and the stopper fitting 9c are not operated (a state shown in Figure 4). The engagement lever 12 is inclined as turned about the fixing pin 13 so that its end formed with a U-shape groove-12a is lowered while the opposite end (not formed with a groove 12a is raised).

When the upper breaker compartment 31a is located at a test position and the breaker 15a is accommodated in the upper breaker compartment 31a as shown in Figure 5, the engagement lever 12 is turned about the fixing pin 13 and maintained in a horizontal position by the stopper pin 16 disposed at the breaker 15a. Therefore, the engagement lever 12 and the engagement pin 14 disposed at the front door 1 do not interfere with each other so that the front door 1 is freely opened and closed.

In a case where the front door 1 is open and the breaker 15a is located at a disconnection position, or when the breaker 15a is pushed in to the disconnection position, as shown in Figure 6, the stopper fitting 9c and the stopper pin 16 disposed at the breaker 15a interfere with each other so that the breaker 15a is stopped at the disconnection position. When the breaker 15a is pushed in to the disconnection position, the breaker loading/unloading mechanism 18 and the frame fixing board 19 disposed in the upper breaker compartment 31a are brought into contact with each other and fixed in position.

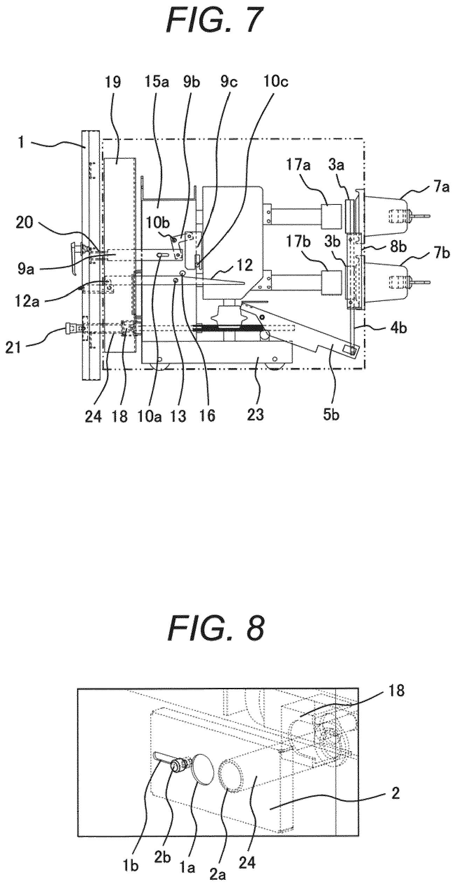

Now referring to Figure 7 to Figure 9, description is made on an operation of placing the front door 1 in a closed state and moving the breaker 15a further rearward from the disconnection position.

Referring to the figures, when the front door 1 is closed, the door fixing bracket 20 rotates the stopper operation lever 9b counterclockwise about a fixing pin 10b by pushing in the stopper operation fitting 9a. This causes the stopper operation lever 9b to lift up the stopper fitting 9c so that the interference between the stopper fitting 9c and the stopper pin 16 is cancelled to allow for the loading and unloading of the breaker 15a.

In this state, a knob 2b is slid leftward along a slide slot 1b formed in the front door 1. Then, the handlebar insertion port cover 2 is slidably moved leftward, bringing a handlebar insertion port 2a of the handlebar insertion port cover 2 into alignment with a handlebar insertion port 1a of the front door 1. This allows for the insertion of the handlebar 21. At this time, the cylindrical member 24 is engaged with the breaker loading/unloading mechanism 18. Therefore, if the handlebar insertion port cover 2 is open, the front door 1 cannot be opened or closed.

For further enhancing the safety, the switchgear may be provided with a switch which is turned ON/OFF depending upon the movement of the handlebar insertion port cover 2 when the operation of opening/closing the front door 1 is inhibited. For example, a switch turned ON as pressed by the handlebar insertion port cover 2, which is located at the leftmost position, is provided on a back side of the front door 1. The switchgear is configured such that a control circuit for controlling an operation mechanism of the breaker is electrically disconnected when this switch is turned ON. This configuration reduces a potential risk that a contact in the breaker is accidentally operated when the handlebar insertion port cover 2 is open, resulting in the generation of arcs.

When the shutters 3a and 3b are in open position, the breaker 15a is moved to a rear side of the upper breaker compartment 31a by operating the handlebar 21 while the engagement lever 12 is rotated counterclockwise about the fixing pin 13 in accordance with the position of the stopper pin 16. At this time, the U-shape groove 12a formed at the end of the engagement lever 12 is engaged with the engagement pin 14 disposed on the front door 1 whereby the operation of opening/closing the front door 1 is controlled (inhibited) while the breaker 15a is located at place rearward from the disconnection position.

A shutter operation pin 22 fixed to the breaker 15a drives the shutter operation lever 5a, 5b to rotate by interfering with the shutter operation lever 5a, 5b so as to lift up the shutters 3a and 3b via the shutter operation rod 4a, 4b.

When the breaker 15a is located at the operation position, the breaker 15a is pushed further toward the rear side of the upper breaker component 31a by manipulating the handlebar 21 whereby the disconnection terminals 17a and 17b connected with the breaker 15a are connected to conductors in the disconnection bushings 7a and 7b. Then, the handlebar 21 is removed. The insertion port of the cylindrical member 24 is closed with the handlebar insertion port cover 2 whereby the breaker 15a becomes ready for operation.

At this time (when the breaker 15a is operational), the engagement pin 14 and the engagement lever 12 are engaged with each other and hence, the operation of opening/closing the front door 1 remains under control (The opening/closing operation inhibition is maintained).

Even in this state (the state where the operation of opening/closing the front door 1 is inhibited), the engagement pin 14 is released from the engagement with the engagement lever 12 by sliding the engagement pin 14, thus permitting the front door 1 to be forcibly opened during an emergency.

According to the present embodiment, when the front door 1 is open and the breaker is located at the disconnection position, the movement of the breaker 15a is inhibited. While the front door 1 is closed and the breaker 15a is moved from the disconnection position to the operation position, the operation of opening/closing the front door 1 is disabled so that an erroneous operation can be prevented regardless of whether the worker has been trained or not. Thus, the present embodiment can achieve the enhanced safety of the switchgear.

The operation of opening the front door 1 is physically inhibited when the breaker 15a is located at the position where arcing is most likely to occur. This eliminates a fear of causing serious damage to the worker if blast should occur due to arcing.

The present embodiment has been described by way of the example where the breakers are arranged in upper and lower stages. However, the breaker may be arranged in only one stage. Even in a case where the breakers are arranged in multiple stages, the same effects as those of the above-described present embodiment can be achieved by applying the present embodiment to any one of the breaker stages.

### <Modification>

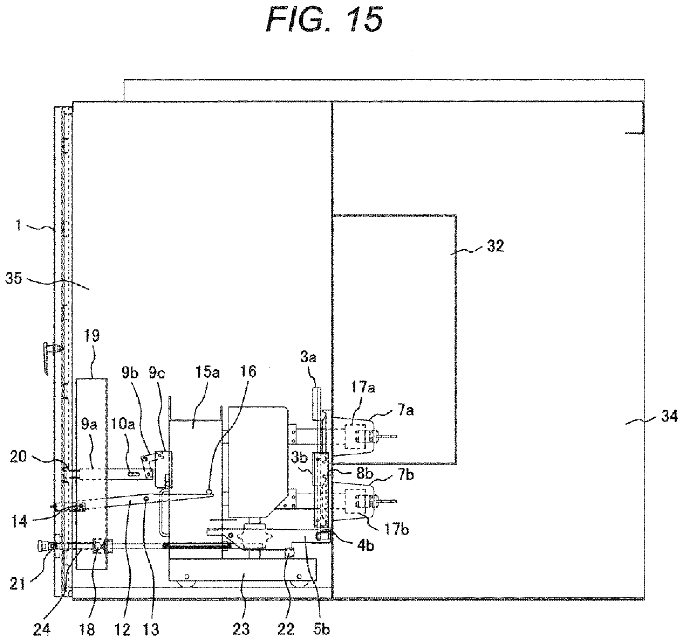

A switchgear configured as shown in Figure 15, for example, is described as another example to which the present embodiment is applied.

Figure 15 is a sectional view of a switchgear taken on the line in a dept direction of the switchgear. The switchgear includes one stage of switching device compartment 35 on the left side thereof as seen in Figure 15, and a bus-bar compartment 32 and a cable compartment 34 on the right side thereof (in a depth direction of the switchgear).

An interlock structure in the switching device compartment 35 is the same as that of Embodiment 1 and hence, the description thereof is dispensed with.

As just described, the present invention is applicable to the switchgear regardless of whether the switching device compartment 35 is arranged in one stage or in multiple stages. The present invention is applicable to breakers or disconnectors if the switching device is a drawer type equipped with a moving mechanism.

It is noted that the present invention is not limited to the above-described embodiment but can include a variety of modifications as long as they fall within the scope of the claims.

### Reference Signs List

1...front door
1a...handlebar insertion port of front door
1b...slide slot
2...handlebar insertion port cover
2a...handlebar insertion port of handlebar insertion port cover
2b...knob
3a, 3b...shutter
4a, 4b...shutter operation rod
5a, 5b...shutter operation lever
6a, 6b...padlock
7a, 7b...disconnection bushing
8a, 8b...shutter operation rod guide
9a...stopper operation fitting
9b...stopper operation lever
9c...stopper fitting
10a, 10b, 10c, 13...fixing pin
11a, 11b...movable linking pin
12...engagement lever
12a...groove of engagement lever
14...engagement pin
15a, 15b...breaker
16...stopper pin
17a, 17b...disconnection terminal
18...breaker loading/unloading mechanism
19...frame fixing board
20...door fixing bracket
21...handlebar
22...shutter operation pin
23...carriage
24...cylindrical member
25...solenoid operation device
30...housing
31a...upper breaker compartment
31b...lower breaker compartment
32...bus-bar compartment
33...bus bar
34...cable compartment
35...switching device compartment

## Claims

1. A switchgear including: a housing (30); a switching device compartment (35) disposed in the housing (30); a switching device disposed in the switching device compartment (35) as carried on a carriage; and a door which is configured to be opened and closed when the switching device is loaded in or unloaded from the switching device compartment (35), the switchgear comprising:
a stopper fitting (9c) and a stopper operation fitting (9a) mounted to an inside wall of the switching device compartment (35); a rotatable stopper operation lever (9b), one end of which is connected to the stopper fitting (9c) and the other end of which is connected to the stopper operation fitting (9a); a handlebar (21) configured for operating a loading and unloading mechanism (18) of the switching device for moving the switching device between an operation and a disconnection position, **characterized in** further comprising:
a stopper pin (16) mounted to the switching device; a door fixing bracket (20) projected from an inner side of the door; a cylindrical member (24) fixed on one side to a handlebar insertion port cover (2) at an insertion port (2a) which is formed in the door and in which the handlebar (21) is configured to be inserted; a switching device loading/unloading mechanism (18) to be engaged with the handlebar (21) inserted in the cylindrical member (24); and a handlebar insertion port cover (2) which closes an insertion port of the cylindrical member (24) when the handlebar (21) is not inserted in the cylindrical member (24); an engagement lever (12) rotatably mounted to the inside wall of the switching device compartment (35) via a fixing pin (10a-c); and an engagement pin (14) mounted to the inner side of the door and engageable with the engagement lever (12), wherein:
when the switching device is accommodated in the switching device compartment (35), the engagement lever (12) is rotated about the fixing pin (10a-c) and retained in a horizontal position by the stopper pin (16) while the engagement lever (12) and the engagement pin (14) do not interfere with each other;
when the switching device is moved to a rear side of the switching device compartment (35) by manipulating the handlebar (21), the engagement lever (12) is rotated in accordance with the position of the stopper pin (16), bringing a groove (12a) formed at an end of the engagement lever (12) into engagement with the engagement pin (14);
when the door is in an open state and the switching device is located at a disconnection position, the switching device is stopped at the disconnection position due to interference between the stopper fitting (9c) and the stopper pin (16);
when the door is closed and the switching device is moved from the disconnection position to an operation position, the door fixing bracket (20) rotates the stopper operation lever (9b) by pushing in the stopper operation fitting (9a) so that the stopper fitting (9c) is lifted up to permit the movement of the switching device between the disconnection and the operation position; and the insertion of the handlebar (21) in the cylindrical member (24) is permitted by opening the handlebar insertion port cover (2) and the cylindrical member (24) is engaged with the switching device loading/unloading mechanism so that if the insertion port cover is open, the front door cannot be opened.

2. The switchgear according to Claim 1,
wherein when the door is in the open state and the switching device is located at the disconnection position, or when the switching device is pushed into the disconnection position, the switching device loading/unloading mechanism is fixed in position by being brought into contact with a frame fixing board (19) disposed in the switching device compartment.

3. The switchgear according to Claim 1, further comprising a switch operatively connected with the movement of the handlebar insertion port cover (2),
wherein when the switch is ON, a control circuit electrically shuts off an operation mechanism in the switching device compartment (35).

4. The switchgear according to Claim 3,
wherein when a disconnection terminal (17a, 17b) connected to the switching device is connected to a conductor in a disconnection bushing (7a, 7b), and the insertion port of the cylindrical member (24) is shut down by removing the handlebar (21) and closing the insertion port with the handlebar insertion port cover (2), the engagement pin (14) is engaged with the engagement lever (12) .

5. The switchgear according to Claim 4,
wherein when the inhibition of the operation of opening and closing the door is maintained, the engagement pin (14) is configured to be released from the engagement with the engagement lever (12) by sliding the engagement pin (14).

6. The switchgear according to Claim 1,
wherein in a state where a shutter (3a, 3b) is provided in the switching device compartment (35) and the switching device is not inserted in the switching device compartment (35), the shutter (3a, 3b) is configured to be lowered by its own weight, covering a live part of a disconnection bushing (7a, 7b).

7. The switchgear according to Claim 6,
wherein the shutter (3a, 3b) includes: a shutter operation rod guide (8a, 8b); a shutter operation rod (4a, 4b) configured to be moved in the shutter operation rod guide (8a, 8b); and a shutter operation lever (5a, 5b) for operating the shutter operation rod (4a, 4b), and
a shutter operation pin (22) fixed to the switching device which is configured to drive the shutter operation lever (5a, 5b) to rotate by interfering with the shutter operation lever (5a, 5b) so as to lift up the shutter (3a, 3b) via the shutter operation rod (4a, 4b) and thus, the live part of the disconnection bushing (7a, 7b) is opened.

## Patentansprüche

1. Schaltanlage, die Folgendes enthält: ein Gehäuse (30), ein Schaltvorrichtungsfach (35), das im Gehäuse (30) angeordnet ist; eine Schaltvorrichtung, die im Schaltvorrichtungsfach (35) wie auf einem Schlitten getragen angeordnet ist; und eine Tür, die konfiguriert ist, geöffnet und geschlossen zu werden, wenn die Schaltvorrichtung in das Schaltvorrichtungsfach (35) eingebracht oder daraus entnommen wird, wobei die Schaltanlage Folgendes umfasst:
ein Anschlagkopplungsstück (9c) und ein Anschlagbetätigungs-Kopplungsstück (9a), die an einer Innenwand des Schaltvorrichtungsfachs (35) angebracht sind; einen drehbaren Anschlagbetätigungshebel (9b), wovon ein Ende mit dem Anschlagkopplungsstück (9c) verbunden ist und wovon das andere Ende mit dem Anschlagbetätigungs-Kopplungsstück (9a) verbunden ist; eine Griffstange (21), die zum Betätigen eines Einbring- und Entnahmemechanismus (18) der Schaltvorrichtung zum Bewegen der Schaltvorrichtung zwischen einer Betriebsposition und einer Trennungsposition konfiguriert ist,
**dadurch gekennzeichnet, dass** sie ferner Folgendes umfasst:
einen Anschlagbolzen (16), der an der Schaltvorrichtung angebracht ist; einen Türarretierungswinkel (20), der von einer Innenseite der Tür vorsteht; ein zylindrisches Element (24), das auf einer Seite an einer Griffstangen-Einführungsöffnungsabdeckung (2) an einer Einführungsöffnung (2a) befestigt ist, die in der Tür gebildet ist und in die die Griffstange (21) konfiguriert ist, eingeführt zu werden; einen Schaltvorrichtungs-Einbring/EntnahmeMechanismus (18), der mit der Griffstange (21), die in das zylindrische Element (24) eingeführt wird, in Eingriff gelangen soll; und eine Griffstangen-Einführungsöffnungsabdeckung (2), die eine Einführungsöffnung des zylindrischen Elements (24) verschließt, wenn die Griffstange (21) nicht in das zylindrische Element (24) eingeführt ist; einen Eingriffhebel (12), der über einen Befestigungsbolzen (10a-c) drehbar an der Innenwand des Schaltvorrichtungsfachs (35) angebracht ist; und einen Eingriffbolzen (14), der auf der Innenseite der Tür angebracht ist und mit dem Eingriffhebel (12) in Eingriff gebracht werden kann, wobei:
dann, wenn die Schaltvorrichtung im Schaltvorrichtungsfach (35) aufgenommen ist, der Eingriffhebel (12) um den Befestigungsbolzen (10a-c) gedreht und durch den Anschlagbolzen (16) in einer horizontalen Stellung gehalten wird, während der Eingriffhebel (12) und der Eingriffbolzen (14) nicht miteinander in Wechselwirkung stehen;
dann, wenn die Schaltvorrichtung durch Handhaben der Griffstange (21) zu einer Rückseite des Schaltvorrichtungsfachs (35) bewegt wird, der Eingriffhebel (12) in Übereinstimmung mit der Stellung des Anschlagbolzens (16) gedreht wird, wobei eine Rille (12a), die an einem Ende des Eingriffhebels (12) gebildet ist, mit dem Eingriffbolzen (14) in Eingriff gebracht wird;
dann, wenn sich die Tür in einem offenen Zustand befindet und die Schaltvorrichtung an einer Trennungsposition angeordnet ist, die Schaltvorrichtung aufgrund der Wechselwirkung zwischen dem Anschlagkopplungsstück (9c) und dem Anschlagbolzen (16) an der Trennungsposition angehalten wird;
dann, wenn die Tür geschlossen ist und die Schaltvorrichtung aus der Trennungsposition an eine Betriebsposition bewegt wird, der Türarretierungswinkel (20) den Anschlagbetätigungshebel (9b) durch Einschieben des Anschlagbetätigungs-Kopplungsstücks (9a) dreht, derart, dass das Anschlagkopplungsstück (9c) angehoben wird, um die Bewegung der Schaltvorrichtung zwischen der Trennungsposition und der Betriebsposition zu ermöglichen; und das Einführen der Griffstange (21) in das zylindrische Element (24) ermöglicht wird, indem die Griffstangen-Einführungsöffnungsabdeckung (2) geöffnet wird und das zylindrische Element (24) mit dem Schaltvorrichtungs-Einbring/Entnahme-Mechanismus in Eingriff gelangt, derart dass dann, wenn die Einführungsöffnungsabdeckung offen ist, die Vordertür nicht geöffnet werden kann.

2. Schaltanlage nach Anspruch 1,
wobei dann, wenn sich die Tür im offenen Zustand befindet und die Schaltvorrichtung an der Trennungsposition angeordnet ist, oder dann, wenn die Schaltvorrichtung an die Trennungsposition geschoben wird, der Schaltvorrichtungs-Einbring/Entnahme-Mechanismus in Stellung arretiert wird, indem bewirkt wird, dass er sich mit einer Rahmenarretierungsplatte (19) in Kontakt befindet, die im Schaltvorrichtungsfach angeordnet ist.

3. Schaltanlage nach Anspruch 1, die ferner einen Schalter umfasst, der mit der Bewegung der Griffstangen-Einführungsöffnungsabdeckung (2) funktionstechnisch verbunden ist,
wobei dann, wenn der Schalter EIN ist, eine Steuerschaltung einen Betätigungsmechanismus im Schaltvorrichtungsfach (35) elektrisch ausschaltet.

4. Schaltanlage nach Anspruch 3,
wobei dann, wenn ein Trennungsanschluss (17a, 17b), der mit der Schaltvorrichtung verbunden ist, mit einem Leiter in einer Trennungsbuchse (7a, 7b) verbunden ist und die Einführungsöffnung des zylindrischen Elements (24) durch Entfernen der Griffstange (21) und Verschließen der Einführungsöffnung mit der Griffstangen-Einführungsöffnungsabdeckung (2) außer Betrieb genommen ist, der Eingriffbolzen (14) sich mit dem Eingriffhebel (12) in Eingriff befindet.

5. Schaltanlage nach Anspruch 4,
wobei dann, wenn das Unterbinden der Betätigung des Öffnens und Schließens der Tür aufrechterhalten wird, der Eingriffbolzen (14) konfiguriert ist, durch Schieben des Eingriffbolzens (14) aus dem Eingriff mit dem Eingriffhebel (12) freigegeben zu werden.

6. Schaltanlage nach Anspruch 1,
wobei in einem Zustand, in dem ein Verschluss (3a, 3b) im Schaltvorrichtungsfach (35) vorgesehen ist und die Schaltvorrichtung nicht in das Schaltvorrichtungsfach (35) eingeführt ist, der Verschluss (3a, 3b) konfiguriert ist, durch sein Eigengewicht abgesenkt zu werden, wobei ein stromführender Abschnitt einer Trennungsbuchse (7a, 7b) abgedeckt wird.

7. Schaltanlage nach Anspruch 6,
wobei der Verschluss (3a, 3b) Folgendes enthält: eine Verschlussbetätigungsstangenführung (8a, 8b); eine Verschlussbetätigungsstange (4a, 4b), die konfiguriert ist, in der Verschlussbetätigungsstangenführung (8a, 8b) bewegt zu werden; und einen Verschlussbetätigungshebel (5a, 5b) zum Betätigen der Verschlussbetätigungsstange (4a, 4b); und
einen Verschlussbetätigungsbolzen (22), der an der Schaltvorrichtung befestigt ist, der konfiguriert ist, den Verschlussbetätigungshebel (5a, 5b) derart anzutreiben, dass der Verschluss (3a, 3b) über die Verschlussbetätigungsstange (4a, 4b) angehoben wird und somit der stromführende Abschnitt der Trennungsbuchse (7a, 7b) geöffnet wird.

## Revendications

1. Appareillage de commutation incluant : un boîtier (30) ; un compartiment à dispositif de commutation (35) disposé dans le boîtier (30) ; un dispositif de commutation disposé dans le compartiment à dispositif de commutation (35) tel que porté sur un chariot ; et une porte qui est configurée pour être ouverte et fermée quand le dispositif de commutation est chargé dans le compartiment à dispositif de commutation (35) ou en est déchargé, l'appareillage de communication comprenant :
un raccord de moyen d'arrêt (9c) et un raccord d'actionnement de moyen d'arrêt (9a) montés sur une paroi intérieure du compartiment à dispositif de commutation (35) ; un levier d'actionnement de moyen d'arrêt (9b) pouvant être mis en rotation, dont une extrémité est connectée au raccord de moyen d'arrêt (9c) et l'autre extrémité est connectée au raccord d'actionnement de moyen d'arrêt (9a) ; une barre de guidage (21) configurée pour actionner un mécanisme de chargement et de déchargement (18) du dispositif de commutation pour déplacer le dispositif de commutation entre une position d'actionnement et une position de déconnexion,
**caractérisé en ce qu'**il comprend en outre :
une broche de moyen d'arrêt (16) montée sur le dispositif de commutation ; une patte de fixation de porte (20) se projetant depuis un côté intérieur de la porte ; un élément cylindrique (24) fixés sur un côté à une couverture (2) d'orifice d'insertion de barre de guidage au niveau d'un orifice d'insertion (2a) qui est formé dans la porte et dans lequel la barre de guidage (21) est configurée pour être insérée; un mécanisme de chargement/déchargement de dispositif de commutation (18) qu'il s'agit d'engager avec la barre de guidage (21) insérée dans l'élément cylindrique (24), et une couverture (2) d'orifice d'insertion de barre de guidage qui ferme un orifice d'insertion de l'élément cylindrique (24) quand la barre de guidage (21) n'est pas insérée dans l'élément cylindrique (24) ;
un levier d'engagement (12) montée en rotation sur la paroi intérieure du compartiment à dispositif de commutation (35) via une broche de fixation (10a-c) ; et une broche d'engagement (14) montée sur le côté intérieur de la porte et pouvant être engagée avec le levier d'engagement (12), dans lequel :
quand le dispositif de commutation est logé dans le compartiment à dispositif de commutation (35), le levier d'engagement (12) est mis en rotation autour de la broche de fixation (10a-c) et est retenu dans une position horizontale par une broche de moyen d'arrêt (16) tandis que le levier d'engagement (12) et la broche d'engagement (14) n'interfèrent pas l'un avec l'autre ;
quand le dispositif de commutation est déplacé jusqu'à un côté arrière du compartiment à dispositif de commutation (35) par manipulation de la barre de guidage (21), le levier d'engagement (12) est mis en rotation en accord avec la position de la broche de moyen d'arrêt (16), amenant une rainure (12a) formée à une extrémité du levier d'engagement (12) jusque dans un engagement avec la broche d'engagement (14) ;
quand la porte est dans un état ouvert et que le dispositif de commutation est situé à une position de déconnexion, le dispositif de commutation est arrêté à la position de déconnexion en raison d'une interférence entre le raccord de moyen d'arrêt (9c) et la broche de moyen d'arrêt (16) ;
quand la porte est fermée et que le dispositif de commutation est déplacé depuis la position de déconnexion jusqu'à une position d'actionnement, la patte de fixation de porte (20) met en rotation le levier d'actionnement de moyen d'arrêt (9b) en poussant dans le raccord d'actionnement de moyen d'arrêt (9a) de sorte que le raccord de moyen d'arrêt (9c) est soulevé pour permettre le déplacement du dispositif de commutation entre la position de déconnexion et la position d'actionnement ; et l'insertion de la barre de guidage (21) dans l'élément cylindrique (24) est permise en ouvrant la couverture (2) d'orifice d'insertion de barre de guidage et l'élément cylindrique (24) est engagé avec le mécanisme de chargement/déchargement de dispositif de commutation de sorte que, si la couverture d'orifice d'insertion est ouverte, la porte avant ne peut pas être ouverte.

2. Appareillage de commutation selon la revendication 1,
dans lequel, quand la porte est dans l'état ouvert et que le dispositif de commutation est situé à la position de déconnexion, ou quand le dispositif de commutation est poussé jusque dans la position de déconnexion, le mécanisme de chargement/déchargement de dispositif de commutation est fixé dans une position en étant amené en contact avec un panneau de fixation de cadre (19) disposé dans le compartiment à dispositif de commutation.

3. Appareillage de commutation selon la revendication 1, comprenant en outre un commutateur connecté de manière fonctionnelle avec le déplacement de la couverture (2) d'orifice d'insertion de barre de guidage, dans lequel, quand le commutateur est activé (ON), un circuit de commande coupe électriquement un mécanisme d'actionnement dans le comportement à dispositif de commutation (35).

4. Appareillage de commutation selon la revendication 3,
dans lequel, quand une borne de déconnexion (17a, 17b) connectée au dispositif de commutation est connecté à un conducteur dans une douille de déconnexion (7a, 7b), et que l'orifice d'insertion de l'élément cylindrique (24) est condamné en enlevant la barre de guidage (25) et en fermant l'orifice d'insertion avec la couverture (2) d'orifice d'insertion de barre de guidage, la broche d'engagement (14) est engagée avec le levier engagement (12).

5. Appareillage de commutation selon la revendication 4,
dans lequel, quand l'empêchement de l'actionnement d'ouverture et de fermeture de la porte est maintenu, la broche d'engagement (14) est configurée pour être libérée de l'engagement avec le levier d'engagement (12) en faisant coulisser la broche d'engagement (14).

6. Appareillage de commutation selon la revendication 1,
dans lequel, dans un état où un obturateur (3a, 3b) est prévu dans le compartiment à dispositif de commutation (35) et où le dispositif de commutation n'est pas inséré dans le compartiment à dispositif de commutation (35), l'obturateur (3a, 3b) est configuré pour être abaissé par son propre poids, couvrant une partie active d'une douille de déconnexion (7a, 7b).

7. Appareillage de communication selon la revendication 6,
dans lequel l'obturateur (3a, 3b) inclut : un guidage (8a, 8b) de tige d'actionnement d'obturateur ; une tige (4a, 4b) d'actionnement d'obturateur configurée pour être déplacé dans le guidage (8a, 8b) de tige d'actionnement d'obturateur ; et un levier (5a, 5b) d'actionnement d'obturateur destiné à actionner la tige (4a, 4b) d'actionnement d'obturateur ; et
une broche (22) d'actionnement d'obturateur fixée au dispositif de commutation qui est configurée pour entraîner le levier (5a, 5b) d'actionnement d'obturateur et l'amener à entrer en rotation par interférence avec le levier (5a, 5b) d'actionnement d'obturateur de manière à soulever l'obturateur (3a, 3b) via la tige (4a, 4b) d'actionnement d'obturateur et par conséquent, la partie active de la douille de déconnexion (7a, 7b) est ouverte.
